# EUROPEAN PATENT APPLICATION

(11) **EP 2 416 288 A1**
(43) Date of publication of application: **08.02.2012**
(21) Application number: 10171927.6
(22) Date of filing: 04.08.2010
(51) Int. Cl.: G06Q 30/00

(54) **Distributed diffusion of advertisements**

(71) Applicant: Vodafone Group PLC, Newbury Berkshire RG14 2FN (GB); Vodafone España, S.A.U., 28108 Alcobendas (ES)
(72) Inventor: Touset Rios, Miguel Angel, E-28050 Madrid (ES); Cajigas Bringas, Guillermo, E-28050 Madrid (ES); Sendra Alcina, José Carlos, E-28050 Madrid (ES)
(74) Representative: Keston, David Arthur

(57) **Abstract**

System and method of distributed diffusion of advertisements where the diffusion is performed by mobile terminals (typically mobile telephones) acting as beacons (10). A service provider server (11) obtains a location profile (13) for each of the beacon terminals (10). Creating users (15) send an advertisement publish request (4) indicating the target area or region where the advertisement it is to be distributed. The service provider server (11) selects beacon terminals (10) to be in charge of distributing the advertisement in accordance with the location profile it has for each beacon terminal (10). It then sends a diffusion request (5) to the selected beacon terminals (10), including the advertisement and the time period over which each beacon terminal (10) is to distribute the advertisement. The beacon terminals (10) that receive the diffusion request then (wirelessly) distribute the content of the advertisements at the time established in said request to whichever receiving users (16) are accessible to the beacon terminals (10).

## Description

### Field of the invention

The present invention refers to the field of mobile telecommunications, and more specifically, to the delivery of advertisements to mobile terminals.

### Background of the invention

The very mobility of mobile terminals provides an opportunity for advertisers but also introduces some additional technical challenges. The location of the *target* of advertisements (e.g. receiving users of mobile terminals) is often critical to the relevance of the advertisement: yet it cannot be assumed that a mobile terminal is effectively always in one location.

The term advertisement is used throughout the present document to indicate the broadcast or multicast message that goods or services are for sale but is also intended to encompass the dissemination of information that may not be commercial in nature such as the sharing of the details of a public event or provision of educational or motivational information.

One known way of providing advertising to mobile terminals according to user location consists of sending advertisements to one or more fixed beacons which cover the location/area of interest.

US patent application US2003216963 reveals an analytical system of distributed advertisements, in which mobile terminals directly receive the advertisement whenever they enter a specific zone, using a centralized advertisement distribution model.

International patent application W00023864 describes a method for collecting information about the user location, in order to improve advertising campaigns and advertisement effectiveness.

Different advertising situations where user location is used give rise to specific issues and challenges:
- When the number of advertisements and/or target users is very high, current solutions cannot withstand the traffic load.
- It would be advantageous to be able to target advertisement campaigns to *any* mobile phone user, regardless of the mobile telecommunications network operator (MNO) they use.
- When there is no fixed beacon infrastructure to implement advertisement diffusion, the costs of implementing such an infrastructure may be prohibitive.
- It would be advantageous for the advertisers to be able to place their advertisements through a number of routes in addition to the use of advertising agencies: in particular it would be convenient for adverts to be placed directly by internet users or companies wishing to send messages to certain locations.

The present invention is, therefore, directed to any mobile phone user, Internet users, advertising agencies and publishing companies.

### Description of the invention

The present invention refers to a method of distributed diffusion of advertisements according to claim 1 and a system according to claim 11. Preferred embodiments of the method and system are defined in dependent claims.

In the present method of distributed diffusion of advertisements, advertisements are created by one class of users - *creating users* (often the party that wishes to publish or place an advertisement), received by another class of users - *receiving users* (i.e. advertisement targets) and diffusion is effected through another class of users - *beacon users.* Beacon users are users of mobile terminals (also referred to as *beacon terminals*), who have previously subscribed to a service provider server to act as a mobile beacon for advertisement diffusion. Naturally, users can belong to any combination of these classes: for instance, a creating user may simultaneously be subscribed as a beacon user and a receiving user may at other times wish to publish an advertisement of his own.

In accordance with the present invention, there is provided a method of distributed diffusion of advertisements by means of one or more mobile beacon terminals, said mobile beacon terminals having previously been subscribed to a service provider server and operable to connect to said service provider server via a mobile telecommunications network, the method comprising:
- obtaining a location profile for each mobile terminal beacon;
- receiving, from a creating user, a request to publish an advertisement, said publish request including an indication of the content of the advertisement and an indication of the desired target location;
- selecting at least one of the mobile beacon terminals in accordance with the publish request and the location profile for said at least one mobile beacon terminal; and
- sending a diffusion request to the or each selected mobile beacon terminal for each advertisement, whereby the or each selected mobile beacon terminal is instructed to distribute the advertisement to receiving users.

It should be appreciated that the order of the steps in this method is not fixed. In particular the step in which the advertising/creating user's requests to publish are received may take place before the service provider server obtains the location profiles that will be used in selecting beacon terminals that comply with the requirements of the advertisement request.

The stage whereby the service provider server acquires a location profile is preferably repeated at predetermined intervals (the intervals typically being of the order of minutes to hours), so as to update the location profiles.

Preferably the publish request further includes an indication of the time period over which the advertisement is to be distributed. Additionally or alternatively the publish request may further include the content of the advertisement.

The diffusion request may also include the content of the advertisement provided in the publish request.

The diffusion request preferably includes an indication of the time period over which the selected mobile beacon terminal is to distribute the advertisement.

Advantageously, the location profile includes information concerning the geographical location where it is most likely that the mobile terminal beacon is located and its probability of being found in that location at different times of the day. Furthermore, where the diffusion request does include an indication of the time period, the time period over which the advertisement is to be distributed is determined in accordance with probabilities of the mobile beacon terminals being in the requested location obtained from the location profile.

It is preferred that those mobile terminal beacon which have received the diffusion request should distribute the content of the advertisement to those receiving users that are accessible to the or each mobile beacon terminal at a time indicated in said request.

The present invention thus proposes the use of a very economical resource to distribute advertisements: user terminals themselves which are equipped with the means for advertisement diffusion and move from location to location, thus acting as mobile beacons.

The stage of obtaining the location profile conveniently comprises:
- sending, to a location profile generating server, a request for the location profile of the mobile beacon terminals subscribed to the service provider server; and
- receiving the location profile from the location profile generating server, the location profile generating server having generated the location profile, after consulting at least one database of stored location information relating to the location of the or each mobile beacon terminals.

The stored location information may be information generated in the mobile communications network and relating to the location of the or each mobile beacon terminals within said network. Alternatively, it may be information sent by the or each mobile beacon terminal and relating to the location and mobility characteristics of the or each mobile beacon terminal.

Thus, stored location information may be information obtained with the assistance of the network - such as Cell ID or assisted GPS (A-GPS) or it may be information obtained from the mobile terminal beacons themselves (such as GPS or other satellite location information). Examples of suitable databases of stored location information include network resources with location information, such as a HLR database, a VLR database, a LBS location platform, and an A-GPS (Assisted-GPS) system.

A service in accordance with the present invention will allow advertisements to be distributed to these mobile beacon terminals for relaying to receiving users, but taking into account the location profile of the mobile beacons rather than their current location. Thus, for example, the service will deliver advertisements to a mobile beacon terminal on the basis of the probability that a mobile beacon terminal is likely (has a high probability) to be in a certain place/location at a certain (later) time. In this way, costs for implementation of a Location Based Service (LBS) and advertisement costs are reduced: prior art LBS platforms need to scan mobile beacons or target users to find out whether they are located in the area of interest *at the delivery time.* With the invention it is not necessary to ask each user where they are *currently* located, drastically reducing traffic in the mobile communication network.

A higher efficiency of advertisement delivery is also achieved, because there is a strong probability that the delivery will be successful.

After performing this diffusion, the mobile beacon terminal can be arranged to send a report about the delivery, so that the service provider server can check that the advertising messages are being delivered as requested.

These mobile beacons will typically transmit the advertisements received from the service to receiving users via wireless technology: examples of suitable wireless technology include Bluetooth [RTM], Wi-Fi, Near Field Communication (NFC), ZigBee and Local Cell Broadcast (LCB). Clearly both mobile beacon and receiving user terminals will need to share suitable components to effect communication over one or more of these wireless technology standards.

Since the wireless technology used to transmit advertisements to receiving users may be independent of the mobile telecommunications network to which the receiving users subscribe, the advertisement will be delivered to different users of *any MNO* in a certain area and at a certain time (provided they wish to receive such advertisements). Furthermore, no fixed infrastructure (such as the fixed beacons of the prior art) is needed to spread these advertisements.

The stage of acquiring the location profile preferably comprises:
- the service provider server sending a request for the location profile of the beacon terminals subscribed to the service to a location profile generating server;
- the location profile generating server, generating the location profile, after consulting at least one database; such data base can have information generated at the mobile communications network and related to the location of beacon terminals in such network or information sent by the users of beacon terminals and related to their mobility and location habits;
- the location profile generating server sending the location profile to the service provider server.

The diffusion of the advertisement content to the receiving users can be done according to any of the following wireless communication means: Bluetooth, Wi-Fi, NFC (Near Field Communication), ZigBee, LCB (Local Cell Broadcast).

The method can comprise sending and activating via OTA an application to manage the service, from the service provider server to the beacon terminal when the former receives a subscription request to the advertisement diffusion service from such beacon terminal.

At the stage of sending the request for using the service, the time when the advertisement must be distributed can be included in the request. The time when each beacon terminal must spread the advertisement can also be determined by the service provider server based on probabilities, included in the location profile table, of the beacon terminals being at the requested area or region.

In accordance with a further aspect of the invention there is provided a system of distributed diffusion of advertisements, the system comprising: a service provider server; and at least one mobile beacon terminal, which had previously been subscribed to the service provider server and which is operable to connect to said service provider server via a mobile telecommunications network;
the service provider server being operable to:
- obtain a location profile for each mobile terminal beacon;
- receive, from a creating user, a request to publish an advertisement, said publish request including an indication of the content of the advertisement and an indication of the desired target location;
- select at least one of the mobile beacon terminals in accordance with the publish request and the location profile for said at least one mobile beacon terminal; and
- send a diffusion request to the or each selected mobile beacon terminal for each advertisement, whereby the or each selected mobile beacon terminal is instructed to distribute the advertisement to receiving users.

The system preferably comprises a location profile generating server operable to:
- receive, from the service provider server, a request for the location profiles of respective mobile beacon terminals (10) subscribed to the service provider server;
- generate the location profiles, after consulting at least one database of stored location information relating to the location of the or each mobile beacon terminals; and
- send the location profile to the service provider server.

Advantageously, the database of stored location information may store information generated in the mobile communications network and relating to the location of the or each mobile beacon terminals within said network. Alternatively, the database of stored location information stores information sent by the or each mobile beacon terminal and relating to the location and mobility characteristics of the or each mobile beacon terminal.

The previous subscription to the service provider server is conveniently effected "over the air" (OTA): the service provider server sending (and activating) an application to manage the advertisement distribution service to mobile beacon terminals when the service provider server receives a request to subscribe to the advertisement distribution service from such mobile beacon terminals. This same mechanism may be used thereafter to allow the application to be updated as required.

The service provider server may also be set up to receive, along with the request to use service from the users of beacon terminals, the time when the advertisement must be distributed; or the time when each beacon terminal must diffuse the advertisement can be determined by the service provider server according to probabilities, included in the location profile table, of the beacon terminals being at the requested area or region.

The applications installed at the mobile beacon terminals can be widgets through which the user receives the advertisement in a transparent way. The advertisements received by the user are locally stored in their terminal and afterwards, according to the location and/or temporal patterns, the widget distributes them using, for example, one of the following wireless communication means: Bluetooth, Wi-Fi, NFC, ZigBee, LCB. Users that distribute it could receive benefits (e.g. money, vouchers or free SMS messages), this would encourage users not only to spread it but also to have the same channel (wireless communication means) open to send and receive advertisements.

### Brief description of the drawings

The following is a very brief description of a series of drawings which help understand the invention better specifically relating to an embodiment of said invention presented as a non-limiting example thereof.
Figure 1 illustrates the different classes of user and supporting architecture in accordance with the present invention.
Figure 2 illustrates the stages of operation whereby beacon users subscribe to the mobile beacon service and upload a beacon service application in accordance with the present invention.
Figure 3 illustrates the stages of operation whereby the service provider server obtains location profiles from a location information database in accordance with the present invention.
Figure 4 illustrates the stages of operation whereby advertisements are passed first to the service provider server and then suitable mobile beacons are selected in accordance with the present invention.
   and
Figure 5 illustrates the stages of operation whereby advertisements are distributed first to beacon terminals and then onward to receiving users in accordance with the present invention.

### Description of a preferred embodiment of the invention

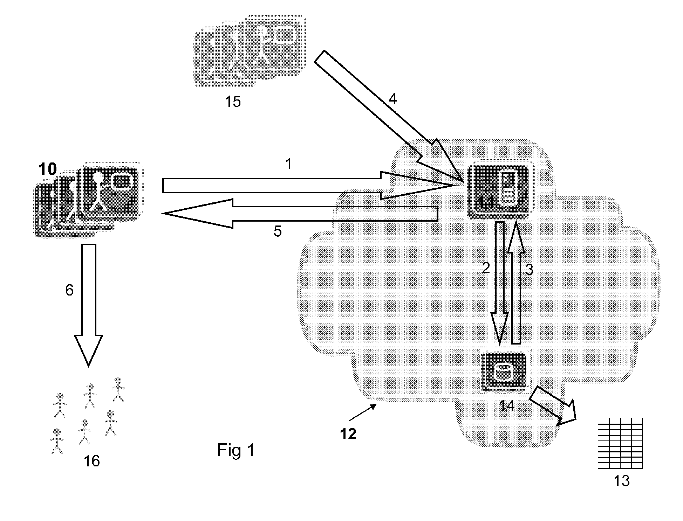

The elements of the system and stages of the method of the present invention are schematically represented in **Figure 1****.**

In the following text, the term "user" is a metonym for the mobile terminal being used by a user (where the context does not exclude this interpretation).

Initially a group of users 10 is "signed up" to act as mobile terminal beacons. These "beacon users" may each be subscribers of a first mobile telecommunications network operator (MNO 1). Each beacon user sends a subscription request 1 to a service provider server 11 belonging, for example, to mobile telecommunications network 12 (operated by MNO 1). The service provider server 11 may alternatively be a platform for sending advertisements external to MNO 1. Each one of the beacon users thus subscribes to act as an advertisement diffusion mobile beacon terminal 10.

The subscription request 1 may be sent in a number of different ways: sending a message through the beacon terminal 10, through the Internet, etc. In the event of using an advertisement platform external to MNO 1, these beacon users 10 could be subscribers of other mobile telecommunications network operators (MNO 2, MNO 3 etc.). In this case, there may not be a simple way of gathering location information from the network and location information (such as beacon user location habits) may be supplied by the beacon user rather than by elements of any given MNO.

After consulting a location profile generating server 14 (step 2), the service provider server 11 receives a location profile 13 (usually in the form of a table showing patterns for location over time and a probability estimate for presence in a location at a given time) for each beacon user 10 subscribed to the service.

In one embodiment, the location profile generating server 14 is a location profile generator for those beacon users 10 in the network 12 who, as indicated by the service provider server 11, periodically check the network nodes to see their position. The server 14 generates the location profile 13 by, amongst other steps: calculating probabilities from historical location information; updates the location profiles on a regular basis (typically at intervals of the order of minutes or hours); and finally sending the location profiles (step 3) to the service provider server 11. The server 14 could also send all available location profiles 13 regularly so that the service provider server 11 always has an updated table for all beacon users 10.

The location profile generating server 14 can access a data base with information generated at the mobile communications network 12, as the information stored at the HLR (Home Location Register; a central database that contains details about each user with authorization to use the communications network) or VLR (Visitor Location Register; database containing each user's location). The location profile can be stored in a table.

The service provider server 11 does not have to continually request the location profile 13 for every advertisement, since it can try to meet the advertisement requirement using those location profiles 13 it already has from previous enquiries and/or it can update them after certain periods of time, so in this way, it reduces the enquiry traffic. For each beacon user 10, a corresponding location profile 13 will be provided, for each time slot, the area or region where it is most likely to be located at that particular time. The process of obtaining such table is described in detail in European Patent Application No. 08380214.0 (published as EP2015101).

The (creating/publishing) users 15 of the distributed advertising service (whether they are users of MNO 1, of another MNO, Internet users or advertising agencies with proprietary interfaces to the service provider server 11 which want to publish any advertisement to mobile devices) send a (publish request) message 4 to the service provider server 11 indicating, along with the request to use the distributed advertising service, the content of the advertisement, the area or region of interest and optionally the time when it must be sent (period of the day, day of the week, specific hour, etc.). In a preferred embodiment the request includes the content of the advertisement itself. Other parameters could also be added such as the level of service (gold, silver, etc.) according to the probability of the mobile beacons and the number thereof used to distribute the message.

Next, for each advertisement publish request received, the service provider server 11 selects the beacon users 10 that are most likely to be at the area or region of interest and at the indicated time for the corresponding advertisement, using the location profile 13 of the users (mobile beacons) generated by the location profile generating server 14, thereby identifying beacon users that would be most suited to acting as mobile beacons to distribute that advertisement. Such selection can be pre-established at the service provider server 11: e.g., sending it to n (n being a predefined number in the system) beacon users who have a higher probability of availability; or sending it to those beacon users whose probability is higher than P (P being a determined threshold value). The service provider server 11 sends a distribution request 5 (typically with the advertisement content for distribution), along with information relating to the time when it should be distributed, to the beacon users 10 who have been previously selected for each advertisement.

Finally, beacon users 10 distribute 6 the advertisements that they received in (or associated with) the previous advertisement request, and at the time indicated in said request, to the receiving users 16 who are accessible. To do this, beacon users 10 can have a widget/application installed and configured to perform all tasks in a transparent way to the user.

In a preferred embodiment of the invention, this distribution step is effected through wireless communication. There exist different wireless communication means which can be used, such as Bluetooth, Wi-Fi, NFC (Near Field Communication), ZigBee, LCB (Local Cell Broadcast), etc. Alternative mechanisms such as sending the advertisements through a power-line communications network may be adopted - this last being attractive as it can be implemented by a user while their device is plugged in to charge.

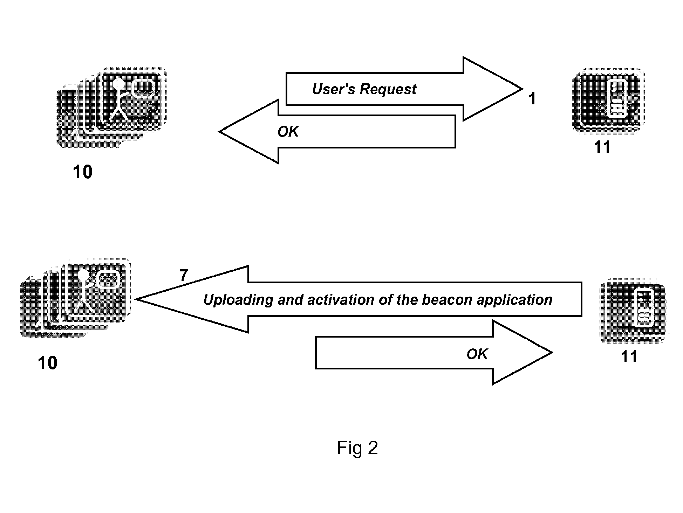

**Figure 2** shows the procedure whereby beacon users subscribe to the mobile beacon service and upload a beacon service application. The Figure shows the delivery of a request for subscription 1 to the service provider server 11 of a mobile communications network 12. The service provider server 11 can send a confirmation to the beacon user 10 that the request for subscription to the service has been sent.

The service provider server 11 can also send 7 and activate via OTA (Over the Air programming) to the mobile terminal of the beacon user 10 a service application (or widget) so that that user's terminal can perform the different steps of the method, although said application can also be preloaded in the mobile terminal, thus avoiding the need to upload it. The mobile terminal of the beacon user 10 can respond in such case with a confirmation message when the application is correctly loaded and executed.

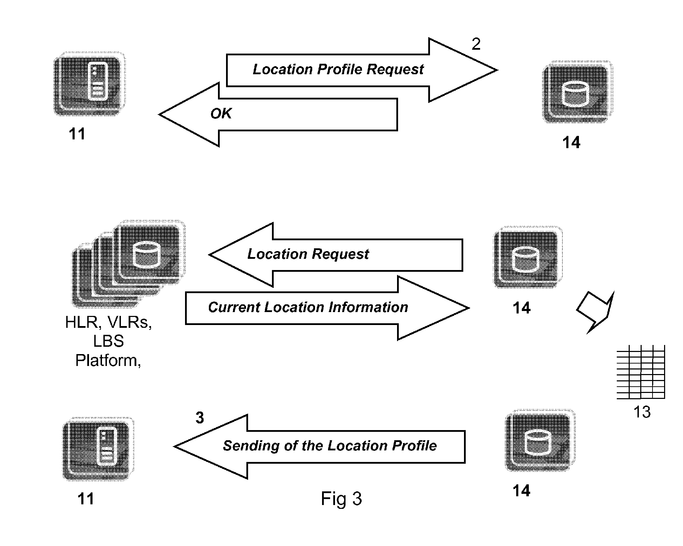

**Figure 3** shows in detail the procedure whereby the service provider server obtains location profiles 13 from a location information database. The service provider server 11 sends a request 2 for the location profile of some or all beacon users 10 subscribed to the service; this request being sent to a location profile generating server 14 which has information about users' location, or access thereto. In the illustrated embodiment, the location profile generating server 14 accesses network resources with location information, such as for example a HLR database, a VLR database, a LBS location platform, an A-GPS (Assisted-GPS) system, etc. Finally, the location profile generating server 14 generates the location profile 13 of those beacon users 10 and sends 3 such location profile 13 to the service provider server 11. In another embodiment beacon users may create their own location profile for example through an application dialog form.

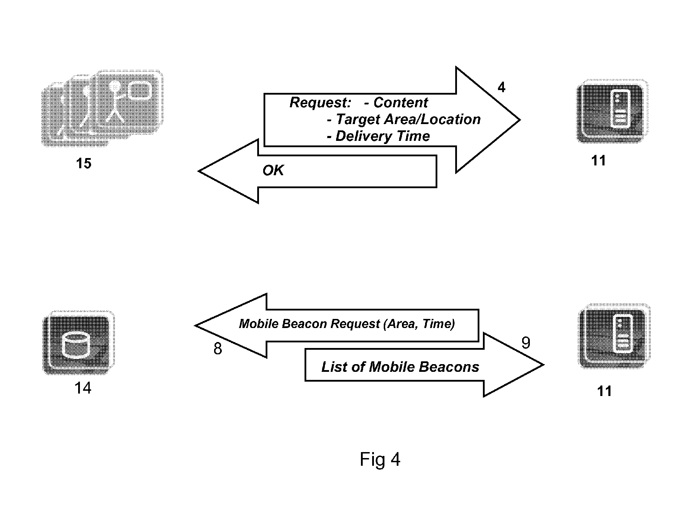

**Figure 4** illustrates the procedure whereby advertisements are passed first to the service provider server and then suitable mobile beacons are selected. The Figure shows the advertisement sending request 4 and the recruitment, for each request 4 of advertisement distribution, of the beacon users 10 (or mobile beacons) that will be in charge of distributing the advertisements. In order to obtain the most appropriate beacon users 10, the server 11 asks the location profile generating server 14 to inform which beacon users 10 meet the area and time criteria according the patterns of the area where the advertisement must be distributed and the time of the day when it must be distributed. From those details the location profile generating server 14 sends the users who will most likely be in the area at the specific time, and the server 11 is in charge of selecting among them whom the advertisement will be sent to; being able to choose according to the level of service quality, selecting only those beacons that have a certain probability. Also, the location profile generating server 14 could regularly refer 3 the location profiles 13 to the service provider server 11 so that it always has an updated table.

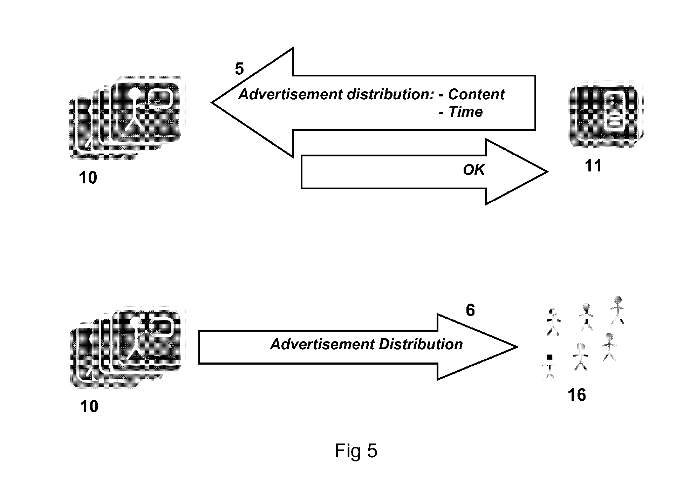

**Figure 5** illustrates the procedure whereby advertisements are distributed first to beacon terminals and then onward to receiving users. It shows the delivery of an advertisement distribution request 5 from server 11 to the selected beacon users 10, sending along with said request the content of the advertisement to be distributed, and the time when it must be distributed. Afterwards, beacon users 10 distribute 6 the advertisements at the time indicated at the distribution request.

While the service provider server 11 and the location profile generating server 14 are illustrated as independent entities, both elements may be provided in common physical server. Likewise the functions of the service provider server 11 may be distributed amongst a number of physical and logical entities: for instance the storage of advertisement content supplied in publish requests or separately may be carried out by a different entity from the interface with the location profile generating server 14 and/or the interface whereby the beacon terminals receive their instructions regarding when and when to distribute the advertisements they have received.

## Claims

1. Method of distributed diffusion of advertisements by means of one or more mobile beacon terminals (10), said mobile beacon terminals (10) having previously been subscribed to a service provider server (11) and operable to connect to said service provider server (11) via a mobile telecommunications network (12), the method comprising:
- obtaining a location profile (13) for each mobile terminal beacon (10);
- receiving, from a creating user (15), a request (4) to publish an advertisement, said publish request including an indication of the content of the advertisement and an indication of the desired target location;
- selecting at least one of the mobile beacon terminals (10) in accordance with the publish request and the location profile (13) for said at least one mobile beacon terminal (10); and
- sending a diffusion request (5) to the or each selected mobile beacon terminal (10) for each advertisement, whereby the or each selected mobile beacon terminal (10) is instructed to distribute the advertisement to receiving users (16).

2. The method of claim 1, wherein the publish request (4) further includes an indication of the time period over which the advertisement is to be distributed.

3. The method of claim 1 or claim 2, wherein the publish request (4) further includes the content of the advertisement.

4. The method of claim 3, wherein the diffusion request (5) includes the content of the advertisement provided in the publish request (4).

5. The method of any one of the preceding claims, wherein the diffusion request (5) includes an indication of the time period over which the selected mobile beacon terminal (10) is to distribute the advertisement.

6. The method of any one of the preceding claims, wherein the location profile (13) includes information concerning the geographical location where it is most likely that the mobile terminal beacon (10) is located and its probability of being found in that location at different times of the day.

7. The method of claim 6 when dependent upon claim 5, wherein the time period over which the advertisement is to be distributed is determined in accordance with probabilities of the mobile beacon terminals (10) being in the requested location.

8. The method of any one of claims 5 to 7, wherein those mobile terminal beacon (10) which have received the diffusion request (5) distribute the content of the advertisement to the receiving users (16) accessible to the or each mobile beacon terminal (10) at a time indicated in said request.

9. The method of any one of the preceding claims, wherein the stage of obtaining the location profile (13) comprises:
- sending, to a location profile generating server (14), a request (2) for the location profile (13) of the mobile beacon terminals (10) subscribed to the service provider server (11); and
- receiving the location profile (13) from the location profile generating server (14), the location profile generating server (14) having generated the location profile (13), after consulting at least one database of stored location information relating to the location of the or each mobile beacon terminals (10).

10. The method of claim 9, wherein the stored location information is information generated in the mobile communications network (12) and relates to the location of the or each mobile beacon terminals (10) within said network (12).

11. The method of claim 9, wherein the stored location information is information sent by the or each mobile beacon terminal (10) and relating to the location and mobility characteristics of the or each mobile beacon terminal (10).

12. System of distributed diffusion of advertisements, the system comprising:
a service provider server (11); and
at least one mobile beacon terminal (10), which had previously been subscribed to the service provider server (11) and which is operable to connect to said service provider server (11) via a mobile telecommunications network (12);
the service provider server (11) being operable to:
- obtain a location profile (13) for each mobile terminal beacon (10);
- receive, from a creating user (15), a request (4) to publish an advertisement, said publish request including an indication of the content of the advertisement and an indication of the desired target location;
- select at least one of the mobile beacon terminals (10) in accordance with the publish request and the location profile (13) for said at least one mobile beacon terminal (10); and
- send a diffusion request (5) to the or each selected mobile beacon terminal (10) for each advertisement, whereby the or each selected mobile beacon terminal (10) is instructed to distribute the advertisement to receiving users (16).

13. The system of claim 12, further comprising:
a location profile generating server (14) operable to:
- receive, from the service provider server (11), a request (2) for the location profiles (13) of respective mobile beacon terminals (10) subscribed to the service provider server (11);
- generate the location profiles (13), after consulting at least one database of stored location information relating to the location of the or each mobile beacon terminals (10); and
- send the location profile (13) to the service provider server (11).

14. The system of claim 13, wherein the database of stored location information stores information generated in the mobile communications network (12) and relating to the location of the or each mobile beacon terminals (10) within said network (12).

15. The system of claim 13, wherein the database of stored location information stores information sent by the or each mobile beacon terminal (10) and relating to the location and mobility characteristics of the or each mobile beacon terminal (10).
